# EUROPEAN PATENT SPECIFICATION

(11) **EP 3 868 580 B1**
(45) Date of publication and mention of the grant of the patent: **09.08.2023**
(21) Application number: 20158714.4
(22) Date of filing: 21.02.2020
(51) Int. Cl.: B60D 1/24, B60D 1/56, B60R 19/48

(54) **A TOW BAR ASSEMBLY FOR A VEHICLE AND VEHICLE FITTED WITH SUCH AN ASSEMBLY**
SCHLEPPSTANGENANORDNUNG FÜR EIN FAHRZEUG UND MIT SOLCH EINER ANORDNUNG AUSGERÜSTETES FAHRZEUG
ENSEMBLE BARRE DE REMORQUAGE POUR UN VÉHICULE ET VÉHICULE ÉQUIPÉ D'UN TEL ENSEMBLE

(43) Date of publication of application: 25.08.2021
(73) Proprietor: FCA Italy S.p.A., 10135 Torino (IT)
(72) Inventor: BARUTELLO, Paolo, 10135 Torino (IT)
(74) Representative: Lovino, Paolo

(56) References cited:
- JP-A- 2001 171 560
- JP-A- 2002 068 015
- US-A- 5 054 806
- US-A1- 2005 110 240
- US-A1- 2007 024 027
- US-A1- 2019 084 361

## Description

This invention relates to a tow bar assembly for a vehicle and a vehicle fitted with such an assembly.

For the towing of vehicles, in general, and of motor vehicles, in particular, to which the following discussion will make explicit reference without any loss of generality thereby, it is known to use fixed tow bar assemblies consisting of a coupling frame permanently connected to the structure of the vehicle and of a hooking element having a hook or eye end portion to which, if necessary, a rope or other equivalent vehicle towing device is hooked.

Although used, reliable, and, in some cases, also of a configuration or geometry such as to contribute to the improvement of the aesthetic value of the part of the vehicle on which they are mounted, known towing assemblies, of the type described above, pose serious obstacles to compliance with the conditions imposed by the recent regulation on passive pedestrian safety in case of collision due to their basic non-deformability. Modern bumpers, however, do comply with these conditions in terms of their geometric and deformable characteristics.

A tow hook assembly is disclosed in US 2019/0084361 wherein springs allow to an U-shaped tow hook to deflect in a rearward direction upon a forward impact. A further tow hook assembly is described in document US 2005/110240 A1, wherein a shaft connects a tow hook to an energy management device which allows the tow hook to deflect in a rearward direction upon a forward impact.

The purpose of this invention is to provide a tow bar assembly for a vehicle, which makes it possible to solve the above problems in a simple and economical way and, in particular, to provide a tow bar assembly that is stable during towing and that, at the same time, makes it possible to comply with current regulations in terms of pedestrian safety in case of collision.

According to this invention, a tow bar assembly for a vehicle is provided, as defined in claim 1.

This invention also relates to a vehicle fitted with a tow bar assembly.

According to this invention a vehicle is provided, as defined in claim 11.

The invention will now be described with reference to the accompanying drawings, illustrating a non-limiting embodiment thereof, in which:
Figure 1 is a perspective view with parts removed for clarity of a front portion of a vehicle fitted with a tow bar assembly produced according to the precepts of this invention;
Figure 2 is a perspective view, on an enlarged scale and with parts removed for clarity, of the front portion in Figure 1;
Figure 3 is an exploded perspective view of the portion in Figure 2;
Figure 4 illustrates some assembly steps of the tow bar assembly according to the invention; and
Figure 5 illustrates, in a side view, several variants of a detail of the tow bar assembly in Figures 2 and 3.

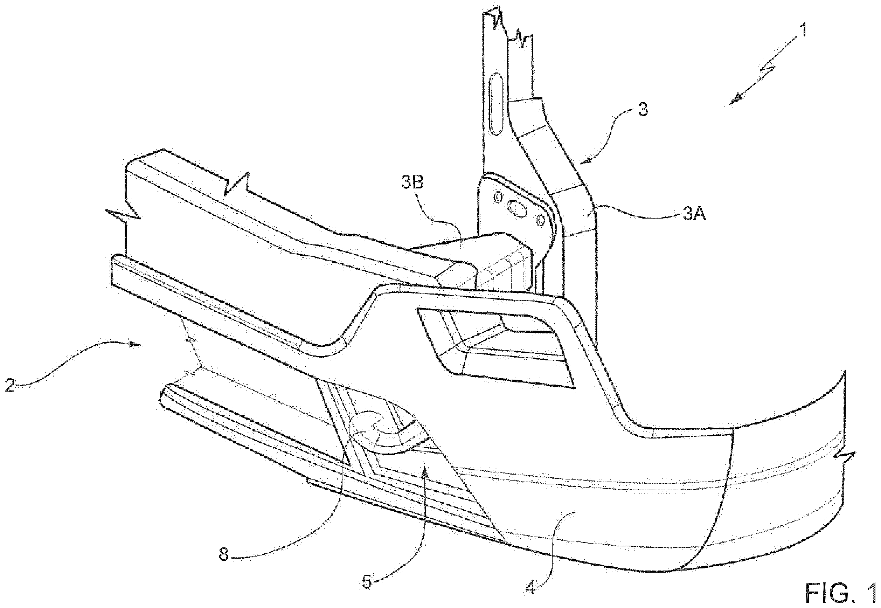

In Figure 1, reference number 1 indicates, as a whole, a vehicle comprising a front portion 2, partially illustrated, and, in turn, comprising a load-bearing structure 3 having a pillar wall 3A and a bracket 3B projecting forward cantilevered from the pillar wall 3A and bearing a bumper 4, connected to one of its free ends, that is configured to meet the requirements of the pedestrian safety regulations.

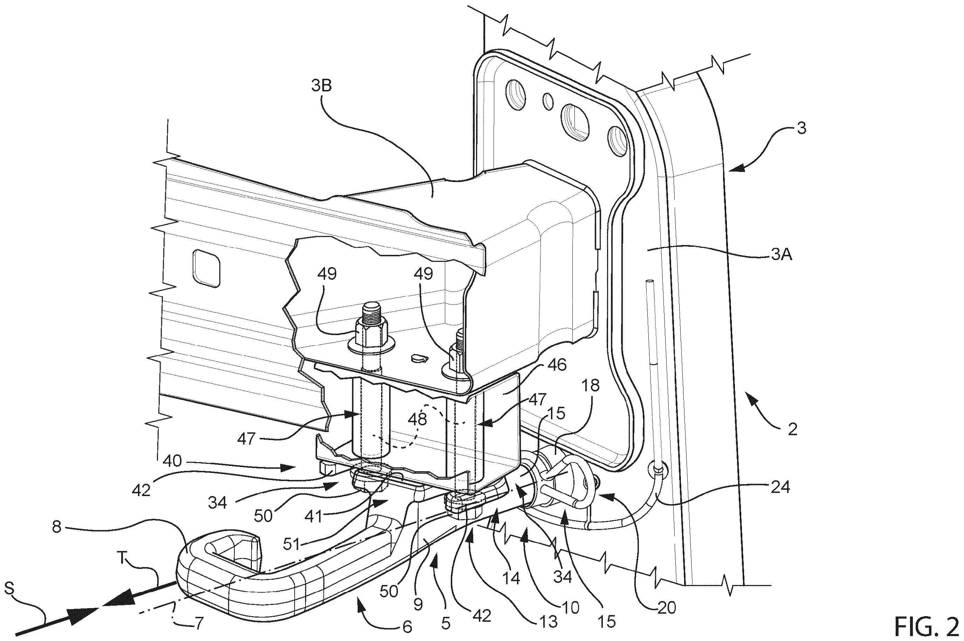

Again with reference to Figure 1 and, in particular, Figure 2, the vehicle 1 also comprises a front tow bar assembly 5 permanently connected to the load-bearing structure 3, so as to remain mounted even during normal use of the vehicle 1.

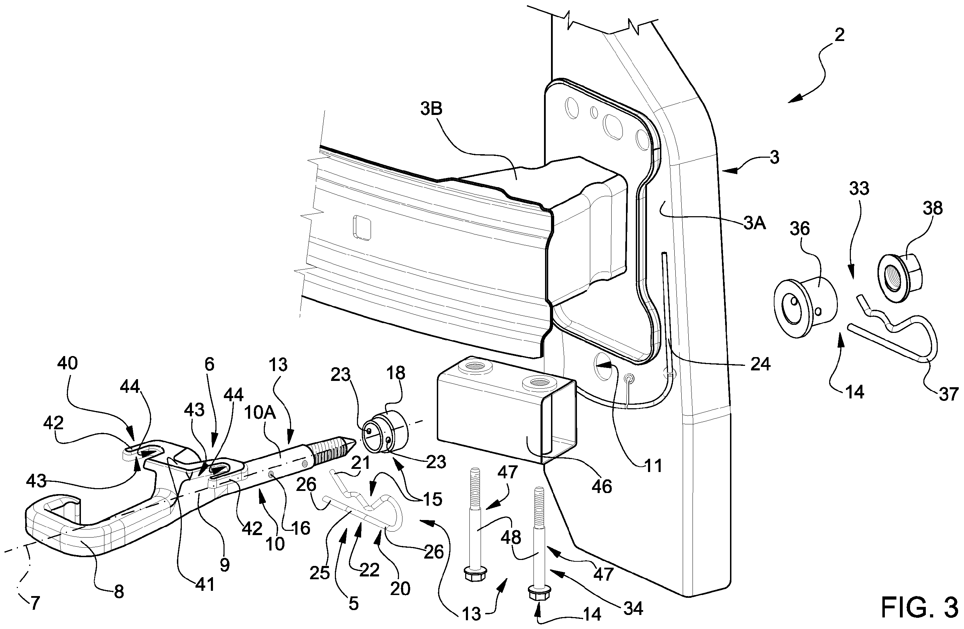

With reference to Figures 2 and 3, the tow bar assembly 5 comprises an extended body 6 in a longitudinal direction 7 and, conveniently but not necessarily, consisting of a single piece.

The extended body 5 comprises a hook or eye coupling end portion 8 hooked to a towing device (known and not shown), which during the towing action exerts a longitudinal towing action T on the coupling end portion 8.

The extended body 6 comprises, then, an intermediate shaped portion 9, from which the end portion 8 extends in one direction and the coupling stem 10 extends in the other.

The stem 10 smoothly passes through a through hole 11 made through the pillar wall 3A, as shown in Figure 3, and forms part of an assembly 13 connecting the extended body 6 to the load-bearing structure 3.

The connecting assembly 13 comprises, in turn, a permanent attachment device 14 for attaching the extended body 6 to the load-bearing structure 3 when the vehicle 1 is being towed, i.e. when the towing action T is exerted on the end portion 8.

The assembly 10 also comprises a collapsible connecting device 15, which is sized to collapse and enable the coupling end portion 8 to retract from the load-bearing structure 3 when a thrust action S is exerted on the coupling end portion 8 that exceeds a predefined thrust value determined to comply with current pedestrian safety regulations and, in any case, below the maximum towing action required.

Again with reference to Figures 2 and 3, the collapsible connecting device 15 comprises an intermediate section 10A of the pin 10 next to the intermediate portion 9 and provided with a through hole 16.

The device 15 also comprises a cylindrical spacer sleeve 18, which is smoothly fitted on the intermediate section 10A, has an internal diameter greater than the diameter of the hole 11 and is arranged to abut against a front surface of the wall 3A. Here and below the terms "front" or "rear" are to be understood with reference to the vehicle's direction of travel.

Finally, the device 15 comprises an elastic, locking split pin 20, e.g. of the type known as an R-Clip, which has a shaped arm 21 straddling the sleeve 18 and a straight arm 22, conveniently, but not necessarily, with a circular cross-section, inserted into the hole 16 through two holes 23 made on the sleeve 18 coaxially to the hole 16 itself.

Conveniently, the holes 23 are made on an end portion of the sleeve 18 next to the intermediate portion 9, so that the split pin 20 is spaced apart from the wall 3A enabling easy handling of the same split pin 20 as well as the passage of pipes or electrical wiring, schematically illustrated and indicated with 24 in Figure 2.

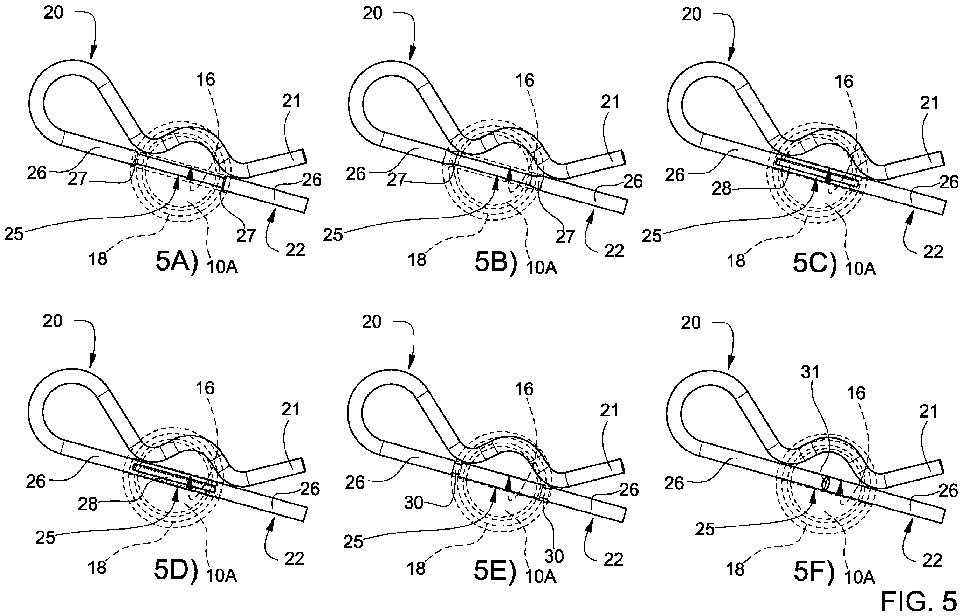

With reference to Figure 5, the straight arm 22 is a weakened arm, or one with a weakened section, that is severed by the stem 10 when the thrust action S acts on it. In particular, the arm 22 comprises an intermediate portion 25 crossing the hole 16 and two side portions 26 arranged on diametrically opposite sides of the intermediate portion 25.

Conveniently, the intermediate portion 25 has a smaller severing cross-section than the cross-section than the side portions 26, as shown in Figure 5a. In the variant illustrated in Figure 5b, the intermediate portion 25 and the side portions 26 are joined together by portions 27 tapered towards the intermediate portion 25.

In the additional variant illustrated in Figure 5c, the intermediate portion 25 is provided with a flattening 28 extending the entire length of the intermediate portion 25, while in the variant shown in Figure 5d, the intermediate portion 25 is provided with two flattenings 28 diametrically opposite each other.

In the variant illustrated in Figure 5e, the intermediate portion 25 has the same cross-section as the side portions 26 and between the intermediate portion 25 and the side portions 26 there are two sections 30, each of which has a smaller cross-section than the cross-sections of the portions 25 and 26.

In the last variant illustrated in Figure 5f, the intermediate portion 25 is weakened by a notch or by a circumferential groove 31 made at the axis of the stem 10.

Again with reference to Figures 2, 3, and 4, the attachment device 14 comprises two attachment assemblies, indicated by 33 and 34 spaced apart along said extended element 6 and borne, respectively, by the stem 10 and by the intermediate portion 9.

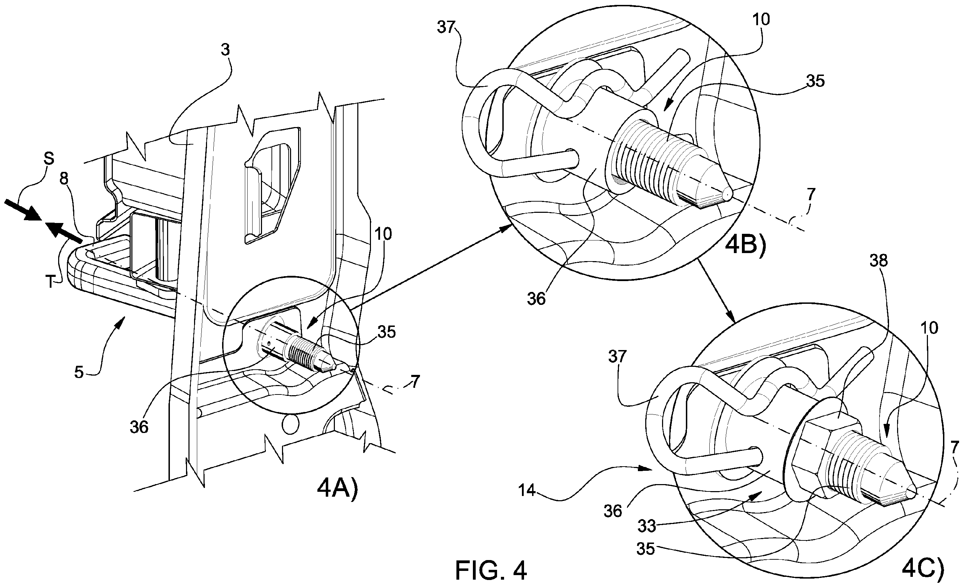

In particular, with reference to Figure 4, the assembly 33 comprises an externally threaded end section 35 of the stem 3 protruding backwards and cantilevered beyond the wall 12, and a spacer sleeve 36 fitted on the stem 3 with clearance and having an end flange arranged to abut against a rear surface of the wall 12 itself.

The assembly 33 then comprises an elastic split pin 37, also known as an R-Clip, for axial and angular locking of the sleeve 36 on the stem 10 (Figure 4b) and a clamping nut 38, screwed on the threaded section 35 to bear and force both the sleeves 18 and 36 against the wall 12 (Figures 2 and 4c).

Again with reference to Figures 2 and 3, the assembly 34 comprises a shaped portion 40 shaped like a plate, arranged above and straddling the intermediate portion 9 and permanently connected to the intermediate portion 9 itself. Conveniently, the shaped portion 40 forms a single piece with the intermediate portion 9.

The shaped portion 40, which basically has the shape of a three, comprises, in turn, an intermediate section 41 permanently connected to the intermediate portion 9 and two wings or appendages 42 extending on opposite sides of the intermediate section 41 parallel to the longitudinal direction 7.

Along with the intermediate section 41, the wings 42 delimit respective, U-shaped recesses 43 with concavities facing forward, i.e. towards the end portion 8.

Each recess 43 is delimited by a corresponding bottom surface 44 adjacent to the device 10 and extending transversely in the longitudinal direction 7.

Finally, the assembly 34 comprises a tubular coupling body 46 arranged between the bracket 3B and the shaped portion 40 and two bolts 47 for clamping the shaped portion 40 itself and the tubular body 46 against the lower surface of the bracket 3B. Conveniently, each bolt 47 has a corresponding stem 48, a threaded nut 49 permanently connected, e.g. by welding, inside the bracket 3B, and a corresponding head 50 arranged to abut against the lower surface of the shaped portion 40 and protruding downwards. Each stem 48 is configured to engage the corresponding recess 43 in a longitudinally sliding manner and is arranged to abut against the corresponding bottom surface 44.

In this way, it is clear that the bolts 47, the shaped portion 40, and the tubular body 46 define a joint 51 (Figure 2) for unidirectional sliding or stopping of the end portion 8 with respect to the structure 3 depending on whether the towing action T or the thrust action S is applied to the end portion 8 itself.

At the same time, the bolts 47, the shaped portion 40, and the tubular body 46 define an angular and side locking assembly of the end portion 8 in relation to the support structure 3 both about and transversely to the longitudinal direction 7.

Therefore, when the towing action T is exerted on the end portion 8, the same end portion 8 is locked on the support structure 3 at two points spaced apart along the longitudinal direction 7, i.e. on the wall 12, by means of the assembly 33 and at the end of the crossbeam 3A by means of the assembly 34.

When, on the other hand, a thrust action S greater than the shear resistance opposed by the arm 22 of the split pin 20 acts on the end portion 8, the arm 22 itself is severed by the stem 13 and frees the extended body 6 from its attachment to the structure 3 enabling the end portion 8 to freely retract without any resistance.

It is clear from the above that the tow bar assembly 5 described can also be used in conjunction with a rear bumper.

In addition, the tow bar assembly 5 could be free of the tubular body 46 if the bracket 3B were already configured to enable the plate portion 40 to directly rest on it and to slide after the collapse of the arm 22.

Not only that, the plate portion 40 could have a different geometry from that indicated and be configured to comprise, for example, a single recess or define a different abutment with the bolts 47 or with a different shoulder borne fixed by the load-bearing structure 3.

Alternatively the plate portion 40 could be free of transverse abutments in the longitudinal direction for the bolts 47 and, in this case, it would only perform the function of an anti-rotation member. Coupling of the intermediate portion to the load-bearing structure and the towing action would only be discharged on the assembly 33.

Finally, from the above is seems clear that one or the other or both the split pins 20 and 37 could be replaced by common shear pin planted at least partially in the stem 10 or fixed to the same in a known way, so as to sever in the central zone.

## Claims

1. A tow bar assembly (5) for a vehicle (1), the assembly (5) comprising an extended body (6) extending in a longitudinal direction (7) having a hook or eye coupling end portion (8) for coupling to a towing device designed to exert a longitudinal towing action (T) on said coupling end portion (8), and a connecting device (13) for connecting the extended body (6) to a load-bearing structure (3) of the vehicle (1); the connecting device (13) comprising first attachment means (14) for attaching said coupling end portion (8) to said load-bearing structure (3) when said towing action (T) is exerted; the connecting device (13) comprising, in addition, second collapsible attachment means (15) configured to enable, in use, a retraction of said coupling end portion (8) in relation to said load-bearing structure (3) when a determined thrust action (S), opposing said longitudinal towing action (T) and of a lower intensity than said longitudinal towing action (T), is exerted on the coupling end portion (8), said extended body (6) comprising a stem (10) permanently connected to said coupling end portion (8), said second collapsible attachment means (15) being borne by said stem (10),**characterised in that** said second collapsible attachment means (15) comprise a shear pin at least partially inserted in said stem (10).

2. The assembly according to claim 1, **characterised in that** said second attachment means (15) comprise an elastic split pin (20) having a straight arm (22) crossing a hole (16) in said stem (10) and a shaped retention arm (21); the straight arm (22) comprising at least one weakened portion (25;30) in relation to the rest of the straight arm (10) and defining said shear pin.

3. The assembly according to claim 2, **characterised in that** said weakened portion (25) extends at least partially inside said stem (10).

4. The assembly according to claim 2, **characterised in that** said weakened portion (30) extends at least partially outside said stem (10).

5. The assembly according to one of the claims from 2 to 4, **characterised in that** said weakened portion (25) has at least one flattening or at least one circumferential groove.

6. The assembly according to claim 1, **characterised in that** said first attachment means (14) comprise a first (33) and a second attachment assembly (34) spaced apart from each other along said extended body (6).

7. The assembly according to claim 6, **characterised in that** said first attachment assembly (33) comprises an externally threaded end section (35) of said stem (10) and a clamping nut (38) screwed on said threaded section (35), a spacer sleeve (36) crossed by said stem (10) and arranged to abut against said clamping nut (38), and an elastic split pin (37) inserted in a hole crossing said sleeve (36) and said stem (10); said sleeve (36) being designed to be arranged to abut against the load-bearing structure (3) of the vehicle (1).

8. The assembly according to claim 6, **characterised in that** said second attachment assembly (34) is arranged between said end portion 8) and said second collapsible attachment means (15).

9. The assembly according to claim 8, **characterised in that** said second attachment assembly (34) comprises a reference body (46) designed to be permanently connected to said load-bearing structure (3) of the vehicle (1) and a sliding coupling joint (51) configured to enable the shifting of said coupling end portion (8) in relation to said reference body (46) following the collapse of said second collapsible attachment means (15).

10. The assembly according to claim 9, **characterised in that** said coupling joint (51) is a unidirectional joint and comprises two wings (42) extending on opposite sides of said longitudinal direction (7) and having respective recesses (43) with concavities turned towards said coupling end portion (8); said coupling joint (51) comprising, in addition, two threaded tie-rods (48) extending through the corresponding recesses (43) with radial clearance and through said reference body (46); said tie-rods (48) comprising end portions designed to be permanently connected to said load-bearing structure (3) and being arranged to abut, each one, against a bottom surface (44) of the corresponding recess (43).

11. A vehicle (1) comprising a load-bearing structure (3) and a tow bar assembly (5) coupled to said load-bearing structure (3), **characterised in that** said tow bar assembly (5) is as claimed in claim 1.

12. The vehicle according to claim 11, **characterised in that** said load-bearing structure (3) comprises a pillar wall (3A) and **in that** the second collapsible attachment means (15) and the coupling end portion (8) are arranged on the same side of said pillar wall (3A).

13. The vehicle according to claim 11, **characterised in that** said load-bearing structure (3) comprises a pillar wall (3A) and **in that** said first attachment means (14) comprise a first (33) and a second attachment assembly (34) arranged on opposite sides of said pillar wall (3A).

14. The vehicle according to claim 13, **characterised in that** the second attachment assembly comprises a unidirectional sliding coupling joint (51) configured to permanently lock the end portion (8) in relation to the structure (3) when a towing action (T) is applied and to enable the end portion (8) to slide and retract in relation to the structure following the collapse of the second collapsible attachment means (15).

15. The vehicle according to claim 14, **characterised in that** said sliding joint (31) comprises a fixed shoulder (48) borne by said load-bearing structure (3) and at least one abutment surface (44) borne by said extended body (6) and acting in abutment against said shoulder (48).

16. The vehicle according to claim 13, **characterised in that** said second attachment assembly (34) comprises angular attachment means(40,46,47) placed between said end portion (8) and said load-bearing structure (3).

## Patentansprüche

1. Abschleppstangenanordnung (5) für ein Fahrzeug (1), wobei die Anordnung (5) einen sich in einer Längsrichtung (7) erstreckenden lang gestreckten Körper (6) mit einem Haken- oder Ösen-Kupplungsendabschnitt (8) zum Ankuppeln an eine Abschleppvorrichtung, die dafür ausgelegt ist, eine längs gerichtete Zugwirkung (T) auf den Kupplungsendabschnitt (8) auszuüben, und eine Verbindungsvorrichtung (13) zum Verbinden des lang gestreckten Körpers (6) mit einer lasttragenden Struktur (3) des Fahrzeugs (1) umfasst; wobei die Verbindungsvorrichtung (13) erste Befestigungsmittel (14) zum Befestigen des Kupplungsendabschnitts (8) an der lasttragenden Struktur (3), wenn die Zugwirkung (T) ausgeübt wird, umfasst; wobei die Verbindungsvorrichtung (13) außerdem zweite, zusammenschiebbare Befestigungsmittel (15) umfasst, die dafür ausgelegt sind, im Gebrauch ein Zurückziehen des Kupplungsendabschnitts (8) in Bezug auf die lasttragende Struktur (3) zu ermöglichen, wenn eine bestimmte Schubwirkung (S), die der längs gerichteten Zugwirkung (T) entgegengerichtet ist und von geringerer Stärke als die längs gerichtete Zugwirkung (T) ist, auf den Kupplungsendabschnitt (8) ausgeübt wird, wobei der lang gestreckte Körper (6) einen mit dem Kupplungsendabschnitt (8) fest verbundenen Schaft (10) umfasst, wobei die zweiten, zusammenschiebbaren Befestigungsmittel (15) von dem Schaft (10) getragen werden, **dadurch gekennzeichnet, dass** die zweiten, zusammenschiebbaren Befestigungsmittel (15) einen Scherstift umfassen, der wenigstens teilweise in den Schaft (10) eingesetzt ist.

2. Anordnung nach Anspruch 1, **dadurch gekennzeichnet, dass** die zweiten Befestigungsmittel (15) einen elastischen Splint (20) umfassen, der einen geraden Arm (22), der ein Loch (16) in dem Schaft (10) durchquert, und einen geformten Haltearm (21) aufweist; wobei der gerade Arm (22) wenigstens einen im Vergleich zum Rest des geraden Armes (22) geschwächten Abschnitt (25; 30) umfasst und den Scherstift definiert.

3. Anordnung nach Anspruch 2, **dadurch gekennzeichnet, dass** sich der geschwächte Abschnitt (25) wenigstens teilweise innerhalb des Schaftes (10) erstreckt.

4. Anordnung nach Anspruch 2, **dadurch gekennzeichnet, dass** sich der geschwächte Abschnitt (30) wenigstens teilweise außerhalb des Schaftes (10) erstreckt.

5. Anordnung nach einem der Ansprüche 2 bis 4, **dadurch gekennzeichnet, dass** der geschwächte Abschnitt (25) wenigstens eine Abflachung oder wenigstens eine umlaufende Rille aufweist.

6. Anordnung nach Anspruch 1, **dadurch gekennzeichnet, dass** die ersten Befestigungsmittel (14) eine erste (33) und eine zweite Befestigungsanordnung (34) umfassen, die entlang des lang gestreckten Körpers (6) voneinander beabstandet sind.

7. Anordnung nach Anspruch 6, **dadurch gekennzeichnet, dass** die erste Befestigungsanordnung (33) einen mit einem Außengewinde versehenen Endabschnitt (35) des Schaftes (10) und eine auf den Gewindeabschnitt (35) aufgeschraubte Spannmutter (38), eine Distanzhülse (36), die von dem Schaft (10) durchquert wird und so angeordnet ist, dass sie an die Spannmutter (38) anstößt, und einen elastischen Splint (37), der in ein die Hülse (36) und den Schaft (10) durchquerendes Loch eingesetzt ist, umfasst; wobei die Hülse (36) dafür ausgelegt ist, so angeordnet zu werden, dass sie an die lasttragende Struktur (3) des Fahrzeugs (1) stößt.

8. Anordnung nach Anspruch 6, **dadurch gekennzeichnet, dass** die zweite Befestigungsanordnung (34) zwischen dem Endabschnitt (8) und den zweiten, zusammenschiebbaren Befestigungsmitteln (15) angeordnet ist.

9. Anordnung nach Anspruch 8, **dadurch gekennzeichnet, dass** die zweite Befestigungsanordnung (34) einen Referenzkörper (46), der dafür ausgelegt ist, fest mit der lasttragenden Struktur (3) des Fahrzeugs (1) verbunden zu werden, und eine gleitende Kupplungsverbindung (51), die dafür ausgebildet ist, das Verschieben des Kupplungsendabschnitts (8) in Bezug auf den Referenzkörper (46) nach dem Zusammenschieben der zweiten, zusammenschiebbaren Befestigungsmittel (15) zu ermöglichen, umfasst.

10. Anordnung nach Anspruch 9, **dadurch gekennzeichnet, dass** die Kupplungsverbindung (51) eine unidirektionale Verbindung ist und zwei Schenkel (42) umfasst, die sich auf gegenüberliegenden Seiten der Längsrichtung (7) erstrecken und jeweilige Ausnehmungen (43) mit dem Kupplungsendabschnitt (8) zugewandten Konkavitäten aufweisen; wobei die Kupplungsverbindung (51) außerdem zwei mit einem Gewinde versehene Zuganker (48) umfasst, die sich durch die entsprechenden Ausnehmungen (43) mit radialem Spiel und durch den Referenzkörper (46) hindurch erstrecken; wobei die Zuganker (48) Endabschnitte umfassen, die dafür ausgelegt sind, fest mit der lasttragenden Struktur (3) verbunden zu werden, und so angeordnet sind, dass jeder von ihnen an eine Bodenfläche (44) der entsprechenden Ausnehmung (43) anstößt.

11. Fahrzeug (1), welches eine lasttragende Struktur (3) und eine mit der lasttragenden Struktur (3) gekoppelte Abschleppstangenanordnung (5) umfasst, **dadurch gekennzeichnet, dass** die Abschleppstangenanordnung (5) der in Anspruch 1 beanspruchten entspricht.

12. Fahrzeug nach Anspruch 11, **dadurch gekennzeichnet, dass** die lasttragende Struktur (3) eine Säulenwand (3A) umfasst, und dadurch, dass die zweiten, zusammenschiebbaren Befestigungsmittel (15) und der Kupplungsendabschnitt (8) auf derselben Seite der Säulenwand (3A) angeordnet sind.

13. Fahrzeug nach Anspruch 11, **dadurch gekennzeichnet, dass** die lasttragende Struktur (3) eine Säulenwand (3A) umfasst, und dadurch, dass die ersten Befestigungsmittel (14) eine erste (33) und eine zweite Befestigungsanordnung (34) umfassen, die auf gegenüberliegenden Seiten der Säulenwand (3A) angeordnet sind.

14. Fahrzeug nach Anspruch 13, **dadurch gekennzeichnet, dass** die zweite Befestigungsanordnung eine unidirektionale gleitende Kupplungsverbindung (51) umfasst, die dafür ausgebildet ist, den Endabschnitt (8) in Bezug auf die Struktur (3) fest zu verriegeln, wenn eine Zugwirkung (T) ausgeübt wird, und zu ermöglichen, dass der Endabschnitt (8) nach dem Zusammenschieben der zweiten, zusammenschiebbaren Befestigungsmittel (15) in Bezug auf die Struktur gleitet und sich zurückbewegt.

15. Fahrzeug nach Anspruch 14, **dadurch gekennzeichnet, dass** die Gleitverbindung (31) eine ortsfeste Schulter (48), die von der lasttragenden Struktur (3) getragen wird, und wenigstens eine Anlagefläche (44), die von dem lang gestreckten Körper (6) getragen wird und als Widerlager für die Schulter (48) wirkt, umfasst.

16. Fahrzeug nach Anspruch 13, **dadurch gekennzeichnet, dass** die zweite Befestigungsanordnung (34) Winkelbefestigungsmittel (40, 46, 47) umfasst, die zwischen dem Endabschnitt (8) und der lasttragenden Struktur (3) angeordnet sind.

## Revendications

1. Ensemble barre de remorquage (5) pour un véhicule (1), l'ensemble (5) comprenant un corps étendu (6) s'étendant dans une direction longitudinale (7) ayant une parte d'extrémité de couplage à crochet ou à œillet (8) pour se coupler à un dispositif de remorquage conçu pour exercer une action de remorquage longitudinale (T) sur ladite partie d'extrémité de couplage (8), et un dispositif de raccordement (13) pour raccorder le corps étendu (6) à une structure de support de charge (3) du véhicule (1) ; le dispositif de raccordement (13) comprenant des premiers moyens de fixation (14) pour fixer ladite partie d'extrémité de couplage (8) à ladite structure de support de charge (3) lorsque ladite action de remorquage (T) est exercée ; le dispositif de raccordement (13) comprenant, de plus, des seconds moyens de fixation (15) repliables configurés pour permettre, à l'usage, une rétraction de ladite partie d'extrémité de couplage (8) par rapport à ladite structure de support de charge (3) lorsqu'une action de poussée (S) déterminée, opposée à ladite action de remorquage longitudinale (T) et d'intensité inférieure à ladite action de remorquage longitudinale (T), est exercée sur la partie d'extrémité de couplage (8), ledit corps étendu (6) comprenant une tige (10) raccordée, de manière permanente, à ladite partie d'extrémité de couplage (8), lesdits seconds moyens de fixation (15) repliables étant portés par ladite tige (10), **caractérisé en ce que** lesdits seconds moyens de fixation (15) repliables comprennent une broche de cisaillement au moins partiellement insérée dans ladite tige (10).

2. Ensemble selon la revendication 1, **caractérisé en ce que** lesdits seconds moyens de fixation (15) comprennent une broche fendue (20) élastique ayant un bras droit (22) traversant un trou (16) dans ladite tige (10) et un bras de retenue formé (21) ; le bras droit (22) comprenant au moins une partie affaiblie (25 ; 30) par rapport au reste du bras droit (10) et définissant ladite broche de cisaillement.

3. Ensemble selon la revendication 2, **caractérisé en ce que** ladite partie affaiblie (25) s'étend au moins partiellement à l'intérieur de ladite tige (10).

4. Ensemble selon la revendication 2, **caractérisé en ce que** ladite partie affaiblie (30) s'étend au moins partiellement à l'extérieur de ladite tige (10).

5. Ensemble selon l'une des revendications 2 à 4, **caractérisé en ce que** ladite partie affaiblie (25) a au moins un aplatissement ou au moins une rainure circonférentielle.

6. Ensemble selon la revendication 1, **caractérisé en ce que** lesdits premiers moyens de fixation (14) comprennent un premier (33) et un second ensemble de fixation (34) espacés l'un de l'autre le long dudit corps étendu (6).

7. Ensemble selon la revendication 6, **caractérisé en ce que** ledit premier ensemble de fixation (33) comprend une section d'extrémité (35) extérieurement filetée de ladite tige (10) et un écrou de serrage (38) vissé sur ladite section filetée (35), un manchon d'espacement (36) traversé par ladite tige (10) et agencé pour venir en butée contre ledit écrou de serrage (38), et une broche fendue (37) élastique insérée dans un trou traversant ledit manchon (36) et ladite tige (10) ; ledit manchon (36) étant conçu pour être agencé afin de venir en butée contre la structure de support de charge (3) du véhicule (1).

8. Ensemble selon la revendication 6, **caractérisé en ce que** ledit second ensemble de fixation (34) est agencé entre ladite partie d'extrémité (8) et lesdits seconds moyens de fixation (15) repliables.

9. Ensemble selon la revendication 8, **caractérisé en ce que** ledit second ensemble de fixation (34) comprend un corps de référence (46) conçu pour être raccordé, de manière permanente, à ladite structure de support de charge (3) du véhicule (1) et un joint de couplage (51) coulissant configuré pour permettre le déplacement de ladite partie d'extrémité de couplage (8) par rapport audit corps de référence (46) suite au repliage desdits seconds moyens de fixation (15) repliables.

10. Ensemble selon la revendication 9, **caractérisé en ce que** ledit joint de couplage (51) est un joint unidirectionnel et comprend deux ailes (42) s'étendant sur les côtés opposés de ladite direction longitudinale (7) et ayant des évidements (43) respectifs avec des concavités tournées vers ladite partie d'extrémité de couplage (8) ; ledit joint de couplage (51) comprenant, de plus, deux tirants d'assemblage filetés (48) s'étendant à travers les évidements (43) correspondants avec un jeu radial et à travers ledit corps de référence (46) ; lesdits tirants d'assemblage (48) comprenant des parties d'extrémité conçues pour être raccordées de manière permanente à ladite structure de support de charge (3) et étant agencés pour venir chacun en butée contre une surface inférieure (44) de l'évidement (43) correspondant.

11. Véhicule (1) comprenant une structure de support de charge (3) et un ensemble barre de remorquage (5) couplé à ladite structure de support de charge (3), **caractérisé en ce que** ledit ensemble barre de remorquage (5) est selon la revendication 1.

12. Véhicule selon la revendication 11, **caractérisé en ce que** ladite structure de support de charge (3) comprend une paroi de pilier (3A) et **en ce que** lesdits seconds moyens de fixation (15) repliables et la partie d'extrémité de couplage (8) sont agencés sur le même côté de ladite paroi de pilier (3A).

13. Véhicule selon la revendication 11, **caractérisé en ce que** ladite structure de support de charge (3) comprend une paroi de pilier (3A) et **en ce que** lesdits premiers moyens de fixation (14) comprennent un premier (33) et un second ensemble de fixation (34) agencés sur les côtés opposés de ladite paroi de pilier (3A).

14. Véhicule selon la revendication 13, **caractérisé en ce que** le second ensemble de fixation comprend un joint de couplage (51) coulissant unidirectionnel configuré pour verrouiller, de manière permanente, la partie d'extrémité (8) par rapport à la structure (3) lorsqu'une action de remorquage (T) est appliquée et pour permettre à la partie d'extrémité (8) de coulisser et de se rétracter par rapport à la structure suite au repliage des seconds moyens de fixation (15) repliables.

15. Véhicule selon la revendication 14, **caractérisé en ce que** ledit joint coulissant (31) comprend un épaulement fixe (48) porté par ladite structure de support de charge (3) et au moins une surface de butée (44) portée par ledit corps étendu (6) et agissant en butée contre ledit épaulement (48).

16. Véhicule selon la revendication 13, **caractérisé en ce que** ledit second ensemble de fixation (34) comprend des moyens de fixation angulaires (40, 46, 47) placés entre ladite partie d'extrémité (8) et ladite structure de support de charge (3).
